# EUROPEAN PATENT APPLICATION

(11) **EP 2 000 843 A2**
(43) Date of publication of application: **10.12.2008**
(21) Application number: 08155647.4
(22) Date of filing: 05.05.2008
(51) Int. Cl.: G02B 26/00

(54) **Stereoscopic image display**

(30) Priority: 08.06.2007 US 759933
(71) Applicant: ARISAWA MFG. CO., LTD., Joetsu-shi, Niigata 943-8610 (JP)
(72) Inventor: Ura, Kazuhiro, Joetsu-shi Niigata Niigata 943-8610 (JP)
(74) Representative: Tetzner, Michael

(57) **Abstract**

Provided is a stereoscopic image displaying apparatus including: an image generating section emitting right eye image light including the right eye image and left eye image light including the left eye image as linear polarized light of which polarization axes are substantially parallel with each other; and a polarization axis controlling plate that includes a first polarizing region and a second polarizing region that, when the right eye image light and the left eye image light are incident onto the first polarizing region and the second polarizing region respectively, emit the incident right eye image light and left eye image light, as linear polarized light of which polarization axes are substantially orthogonal to each other or circularly polarized light of which polarization axes are rotated in directions opposite to each other, where each of the right eye image generating region and the left eye image generating region of the image generating section includes a pixel having a red color filter, a pixel having a green color filter, and a pixel having a blue color filter, and a retardation value of the polarization axis controlling plate is uneven for alleviating color of the linear polarized light and the circularly polarized light that are emitted. According to the stereoscopic image displaying apparatus, it becomes possible to alleviate the color occurring to the viewed image.

## Description

### BACKGROUND

### 1. TECHNICAL FIELD

The present invention relates to a stereoscopic image displaying apparatus. More particularly, the present invention relates to a stereoscopic image displaying apparatus that includes an image generating section and a polarization axis controlling plate, where the polarization axis controlling plate, when right eye image light including a right eye image and left eye image light including a left eye image which are generated by the image generating section are incident thereto, emits the image light as either linear polarized light of which polarization axes are orthogonal to each other or circularly polarized light of which the polarization axes are rotated in directions opposite to each other.

### 2. RELATED ART

For example as disclosed in Japanese Unexamined Patent Application Publication No. H10-232365, Japanese Unexamined Patent Application Publication No. 2004-264338, and Japanese Unexamined Patent Application Publication No. H9-90431, an image displaying apparatus that includes: an image generating section that causes a right eye image and a left eye image to be displayed in respectively different areas; and a polarization axis controlling plate that causes the polarization axes of polarized light respectively incident onto the two different areas to be orthogonal to each other, is known as an apparatus for showing a stereoscopic image to a viewer.

In viewing the above-mentioned right eye image and the left eye image displayed by the image displaying apparatus, these images take on a different color from the color from the image displaying apparatus. This is due to the fact that, when the polarization axes of the above-mentioned image light is rotated by the polarization axis controlling plate (retarder) of the above-mentioned image displaying apparatus, the angle of rotation slightly differs depending on the color of the image light (wavelength). According to the dependency of the angle of rotation of the polarization axes in the polarization axis controlling plate onto the wavelength of light in this way, when image light is incident onto the polarization axes controlling plate for rotating the polarization axes of incident green light by the angle of 90 degrees for example, the blue light and the red light included in the image light are subjected to deviation of their angles of rotation from the angle of 90 degrees. Therefore, when image light emitted from an image displaying apparatus provided with such a polarization axis controlling plate is transmitted through polarized glasses, change in color with respect to an original image has occurred due to relative increase in intensity of light for a particular color (e.g. green).

### SUMMARY

Accordingly, it is an advantage of the invention to provide a stereoscopic image displaying apparatus capable of solving the above-mentioned problem. This advantage may be achieved through the combination of features described in independent claims of the invention. The dependent claims thereof define further advantageous embodiments of the invention.

As a first aspect of the present invention, provided is a stereoscopic image displaying apparatus for displaying a stereoscopic image to a viewer, comprising: an image generating section that includes a right eye image generating region for generating a right eye image and a left eye image generating region for generating a left eye image, the image generating section emitting right eye image light including the right eye image and left eye image light including the left eye image as linear polarized light of which polarization axes are substantially parallel with each other; and a polarization axis controlling plate that includes a first polarizing region and a second polarizing region that, when the right eye image light and the left eye image light are incident onto the first polarizing region and the second polarizing region respectively, emit the incident right eye image light and left eye image light, as linear polarized light of which polarization axes are substantially orthogonal to each other or circularly polarized light of which polarization axes are rotated in directions opposite to each other, wherein each of the right eye image generating region and the left eye image generating region of the image generating section includes a pixel having a red color filter, a pixel having a green color filter, and a pixel having a blue color filter, and
a retardation value of the polarization axis controlling plate is uneven for alleviating color of the linear polarized light and the circularly polarized light that are emitted.

In addition, it is desirable that the polarization axis controlling plate emits the incident right eye image light and left eye image light, as linear polarized light of which the polarization axes are substantially orthogonal to each other, and the polarization axis controlling plate further has a retardation value of a half wavelength with respect to a wavelength of the red at a position facing the pixel having the red color filter of the image generating section, and a retardation value of a half wavelength with respect to a wavelength of the green at a position facing the pixel having the green color filter of the image generating section, and a retardation value of a half wavelength with respect to a wavelength of the blue at a position facing the pixel having the blue color filter of the image generating section.

In addition, it is desirable that the polarization axis controlling plate emits the incident right eye image light and left eye image light, as circularly polarized light of which polarization axes are rotated in directions opposite to each other, and the polarization axis controlling plate has a retardation value of a quarter wavelength with respect to a wavelength of the red at a position facing the pixel having the red color filter of the image generating section, and a retardation value of a quarter wavelength with respect to a wavelength of the green at a position facing the pixel having the green color filter of the image generating section, and a retardation value of a quarter wavelength with respect to a wavelength of the blue at a position facing the pixel having the blue color filter of the image generating section.

In addition, it is desirable that the polarization axis controlling plate has different thicknesses respectively in a position facing the pixel having the red color filter of the image generating section, a position facing the pixel having the green color filter of the image generating section, and a position facing the pixel having the blue color filter of the image generating section, in an substantially orthogonal direction to a plane direction.

It should be noted here that the summary of the invention does not list all necessary features of the present invention, and that the sub-combinations of the features may also constitute the invention.

### BRIEF DESCRIPTION OF THE DRAWINGS

Fig. 1 is an exploded perspective view showing a stereoscopic image displaying apparatus 100 according to one embodiment of the present invention;

Fig. 2 is a schematic view showing usage state of the stereoscopic image displaying apparatus 100;

Fig. 3 is an enlarged plan view showing a part of an image generating section 160;

Fig. 4 is an enlarged plan view showing a part of a polarization axis controlling plate 180;

Fig. 5 is a schematic cross-sectional view only showing an image displaying section 130 and a polarization axis controlling plate 180 from the stereoscopic image displaying apparatus 100;

Fig. 6 is an exploded perspective view showing a stereoscopic image displaying apparatus 101 according to another embodiment of the present invention; and

Fig. 7 is a schematic cross-sectional view only showing an image displaying section 130 and a polarization axis controlling plate 185 from the stereoscopic image displaying apparatus 101.

### DESCRIPTION OF EXEMPLARY EMBODIMENTS

As follows, an aspect of the present invention is described through embodiments. The embodiments do not limit the invention according to claims and not all combinations of the features described in the embodiments are necessarily essential to means for solving the problems of the invention.

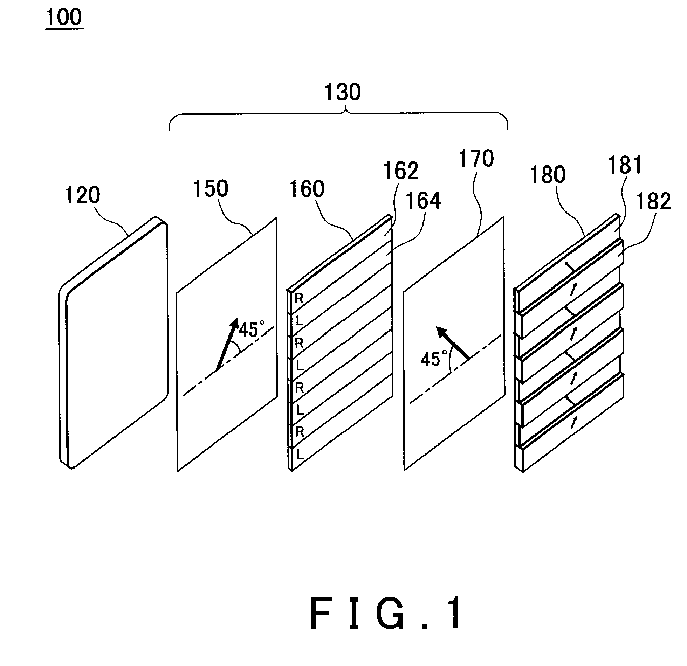

Fig. 1 is an exploded perspective view showing a stereoscopic image displaying apparatus 100 according to one embodiment of the present invention. As shown in Fig. 1, the stereoscopic image displaying apparatus 100 includes a light source 120, an image displaying section 130, and a polarization axis controlling plate 180, in the stated order, which are stored in a housing (not illustrated in the drawing). The image displaying section 130 includes a polarizing plate 150, an image generating section 160, and a polarizing plate 170. A viewer 500 detailed later views a stereoscopic image displayed by this stereoscopic image displaying apparatus 100 from the right side of the polarization axis controlling plate 180 shown in Fig. 1.

The light source 120 is placed on the innermost of the stereoscopic image displaying apparatus 100 from the viewpoint of the viewer 500, and emits white non-polarized light to one surface of the polarizing plate 150 when the stereoscopic image displaying apparatus 100 is used (hereinafter referred to as "usage state of the stereoscopic image displaying apparatus 100"). Here, although the light source 120 is a surface illuminant in the present embodiment, the light source 120 may be a combination of a point light source and a condenser lens, for example, instead of the surface illuminant. An example of condenser lens is a Fresnel lens sheet.

The polarizing plate 150 is provided on the image generating section 160 on the light source 120 side. The polarizing plate 150 has a transmission axis and an absorption axis that is orthogonal to the transmission axis, and when non-polarized light emitted from the light source 120 is incident thereon, transmits light having a polarization axis in substantially parallel with the transmission axis direction among the non-polarized light but blocks light having a polarization axis in substantially parallel with the absorption axis direction. Here, the polarization axis direction is a direction in which light oscillates in the electric field, and the transmission axis direction of the polarizing plate 150 is a direction toward the upper right by the angle of 45 degrees with respect to the horizontal direction when the viewer 500 views the stereoscopic image displaying apparatus 100, as shown by the arrow in Fig.1.

The image generating section 160 has right eye image generating regions 162 and left eye image generating regions 164. The right eye image generating regions 162 and the left eye image generating regions 164 are obtained by dividing the image generating section 160 in the horizontal direction, and a plurality of right eye image generating regions 162 and left eye image generating regions 164 are alternately arranged in the vertical direction as shown in Fig.1.

In the usage state of the stereoscopic image displaying apparatus 100, a right eye image is generated in the right eye image generating regions 162 and a left eye image is generated in the left eye image generating regions 164, in the image generating section 160, respectively. When part of light transmitted through the polarizing plate 150 is incident on each right eye image generating region 162 while a right eye image is generated in each right eye image generating region 162, each right eye image generating region 162 emits image light for a right eye image (hereinafter referred to as "right eye image light"). Furthermore, when another part of the light transmitted through the polarizing plate 150 is incident on each left eye image generating region 164 while a left eye image is generated in each left eye image generating region 164, each left eye image generating region 164 emits image light for a left eye image (hereinafter referred to as "left eye image light"). Here, the right eye image light emitted from the right eye image generating region 162 and the left eye image light emitted from the left eye image generating region 164 are linear polarized light of which polarization axes are in the same direction.

The polarizing plate 170 is provided on the image generating section 160 on the viewer 500 side. When the right eye image light transmitted through the right eye image generating region 162 and the left eye image light transmitted through the left eye image generating region 164 are incident on the polarizing plate 170, the polarizing plate 170 transmits the light of which polarization axis is in substantially parallel with the transmission axis but blocks the light of which polarization axis is in parallel with the absorption axis among the incident light. Here, the transmission axis direction of the polarizing plate 170 is a direction toward the upper left by the angle of 45 degrees with respect to the horizontal direction when the viewer 500 views the stereoscopic image displaying section 100, as shown by the arrow in Fig.1. So as to improve the luminance of the stereoscopic image displaying apparatus 100, it is desirable that the transmission axis direction of the polarizing plate 170 substantially matches the direction of the polarization axes of the right eye image light and of the left eye image light emitted from the image generating section 160.

The polarization axis controlling plate 180 includes first polarizing regions 181 and second polarizing regions 182. The position and the size for each of the first polarizing regions 181 and each of the second polarizing regions 182 in the polarization axis controlling plate 180 correspond to those of each of the right eye image generating regions 162 and each of the left eye image generating regions 164 in the image generating section 160 as shown in Fig.1. Therefore, in the usage state of the stereoscopic image displaying apparatus 100, the right eye image light transmitted through the right eye image generating region 162 is incident on the first polarizing region 181 and the left eye image light transmitted through the left eye image generating region 164 is incident on the second polarizing region 182, for example.

The first polarizing region 181 transmits the incident right eye image light as it is without rotating the polarization axis of the incident right eye image light. Meanwhile, the second polarizing region 182 rotates the polarization axis of the incident left eye image light to the direction orthogonal to the polarization axis of the right eye image light incident on the first polarizing region 181. Therefore, the direction of the polarization axis of the right eye image light transmitted through the first polarizing region 181 and that of the polarization axis of the left eye image light transmitted through the second polarizing region 182 are substantially orthogonal to each other, as shown by the arrows in Fig.1. Note that, in Fig. 1, the arrows shown in the first polarizing regions 181 and the second polarizing regions 182 of the polarization axis controlling plate 180 indicate the directions of the polarization axes of the polarized light transmitted through respective polarizing regions.

In the polarization axis controlling plate 180, a transparent glass or resin is used for each first polarizing region 181. A half wave retarder made of a birefringent material whose optical axis has the angle of 45 degrees with respect to the direction of the polarization axis of the incident left eye image light is used for each second polarizing region 182, for example. In the polarization axis controlling plate 180, the direction of the optical axis of the second polarizing region 182 is either the horizontal direction or the vertical direction. Here, the optical axis indicates one of the phase advance axis or the phase delay axis when light is transmitted through the second polarizing region 182.

Furthermore, a light blocking section having a strip form may be formed on the boundary between each first polarizing region 181 and each second polarizing region 182 on one surface of the polarization axis controlling plate 180 facing the image displaying section 130. The light blocking section absorbs and blocks the image light incident on the first polarizing region 181 over the boundary among the left eye image light to be incident on the second polarizing region 182 adjacent to the first polarizing region 181 in the polarization axis controlling plate 180. In the similar way, the light blocking section absorbs and blocks the image light incident on the second polarizing region 182 over the boundary among the right eye image light to be incident on the first polarizing region 181 adjacent to the second polarizing region 182 in the polarization axis controlling plate 180. In this way, cross talk is less likely to occur in the right eye image light and the left eye image light emitted from the stereoscopic image displaying apparatus 100.

In addition, on the viewer 500 side from the polarization axis controlling plate 180 , i.e. the right side of the polarization axis controlling plate 180 in Fig.1, the stereoscopic image displaying apparatus 100 may have a diffuser panel that diffuses the right eye image light and the left eye image light transmitted through the first polarizing region 181 and the second polarizing region 182 of the polarization axis controlling plate 180 in at least one of the horizontal direction and the vertical direction. For such a diffuser panel, a lenticular lens sheet on which a plurality of hog-backed convex lenses (cylindrical lenses) extend in the horizontal direction or the vertical direction, or a lens array sheet on which a plurality of convex lenses are arranged in a plane is used, for example.

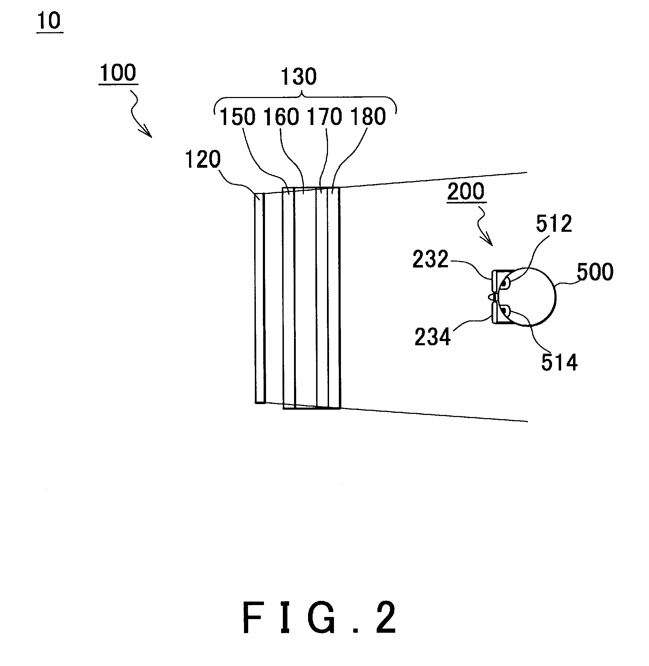

Fig.2 is a schematic diagram showing a usage state of the stereoscopic image displaying apparatus 100. Viewing a stereoscopic image through the stereoscopic image displaying apparatus 100, the viewer 500 views the right eye image light and the left eye image light projected from the stereoscopic image displaying apparatus 100 with polarized glasses 200 as shown in Fig.2. A right eye image transmitting section 232 is disposed at the position for a right eye 512 side and a left eye image transmitting section 234 is disposed at the position for a left eye 514 side of the viewer 500 when the viewer 500 wears the polarized glasses 200. Each of the right eye image transmitting section 232 and the left eye image transmitting section 234 is a polarizing lens having a transmission axis direction different from each other and fixed to a frame of the polarized glasses 200.

The right eye image transmitting section 232 is a polarizing plate of which transmission axis direction is the same as that of the right eye image light transmitted through the first polarizing region 181 and of which absorption axis direction is orthogonal to the transmission axis direction. The left eye image transmitting section 234 is a polarizing plate of which transmission axis direction is the same as that of the left eye image light transmitted through the second polarizing region 182 and of which absorption axis direction is orthogonal to the transmission axis direction. For each of the right eye image transmitting section 232 and the left eye image transmitting section 234, a polarizing lens to which a polarizing film obtained by uniaxially drawing a film impregnated with dichromatic dye is attached is used, for example.

Viewing a stereoscopic image through the stereoscopic image displaying apparatus 100, the viewer 500 views the stereoscopic image displaying apparatus 100 with the polarized glasses 200 as described above, within a range in which the right eye image light and the left eye image light transmitted through the first polarizing region 181 and the second polarizing region 182, respectively, are emitted, so that the right eye 512 can view only the right eye image in the right eye image light and the left eye 514 can view only the left eye image in the left eye image light. Therefore, the viewer 500 is able to perceive the right eye image and left eye image as a stereoscopic image.

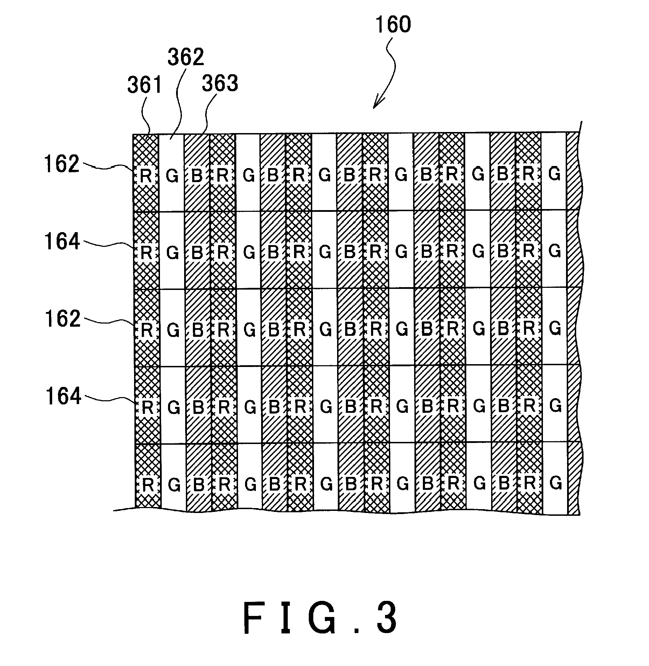

Fig. 3 is an enlarged plan view showing a part of the image generating section 160. As shown in Fig. 3, in the image generating section 160, each of right eye image generating regions 162 and each of left eye image generating regions 164 are divided into a plurality of small cells extending in the horizontal direction. Each of the cells is one of a red display pixel 361, a green display pixel 362, and a blue display pixel 363. Note that the red, green, and blue described herein represent three primary colors forming a color image. Note that in each of the right eye image generating regions 162 and the left eye image generating regions 164 of the image generating section 160, a red display pixel 361, a green display pixel 362, and a blue display pixel 363 are arranged repetitively in the horizontal direction in this order.

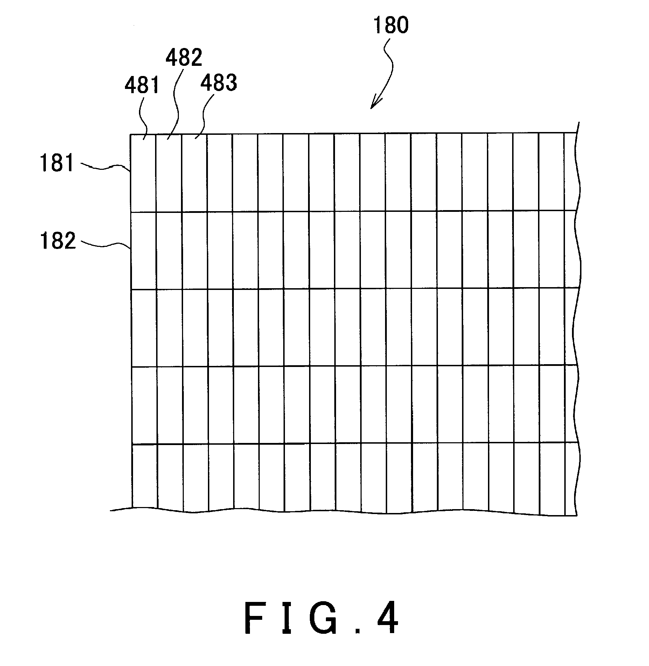

Fig. 4 is an enlarged plan view showing a part of the polarization axis controlling plate 180. As shown in Fig. 4, in the polarization axis controlling plate 180, each of the first polarizing regions 181 and each of the second polarizing regions 182 are also divided into a plurality of small cells extending in the horizontal direction, just as the right eye image generating regions 162 and the left eye image generation regions 164 of the image generating section 160. Each of the cells constitutes one of a red transmission region 481, a green transmission region 482, and a blue transmission region 483. Note that in each of the first polarizing regions 181 and the second polarizing regions 182 of the polarization axis controlling plate 180, a red transmission region 481, a green transmission region 482, and a blue transmission region 483 are arranged repetitively in the horizontal direction in this order.

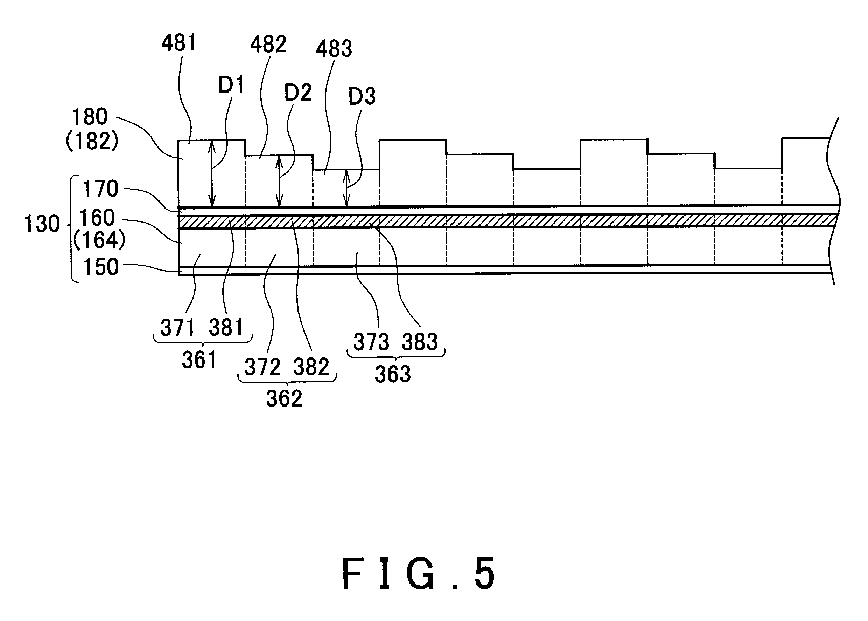

Fig. 5 is a schematic cross-sectional view only showing the image displaying section 130 and the polarization axis controlling plate 180 from the stereoscopic image displaying apparatus 100. Fig. 5 is a schematic cross-sectional view in which the stereoscopic image displaying apparatus 100 is cut at a horizontal cross section across the second polarizing region 182 of the polarization axis controlling plate 180. As shown in Fig. 5, a red display pixel 361 of a left eye image generating region 164 is placed in a position facing a red transmission region 481 of a second polarizing region 182, in the state where the image displaying section 130 and the polarization axis controlling plate 180 are assembled as part of the stereoscopic image displaying apparatus 100. Likewise, a green display pixel 362 and a blue display pixel 363 of the left eye image generating region 164 are placed in positions facing a green transmission region 482 and a blue transmission region 483 of the second polarizing region 182, respectively. Although not illustrated in the drawings, a red display pixel 361, a green display pixel 362, and a blue display pixel 363 of a right image generating region 162 are also placed in positions facing a red transmission region 481, a green transmission region 482, and a blue transmission region 483 of the first polarizing region 181, respectively.

In addition, as shown in Fig. 5, the red display pixel 361 has a liquid crystal shutter 371 and a red color filter 381. Likewise, the green display pixel 362 has a liquid crystal shutter 372 and a green color filter 382, and the blue display pixel 363 has a liquid crystal shutter 373 and a blue color filter 383. The liquid crystal shutters 371, 372, and 373 switch between a state of transmitting light having transmitted through the polarizing plate 150 to the side of the color filters 381, 382, and 383, respectively, and a state of blocking the light.

Suppose a case where the liquid crystal shutters 371 and 372 are in the state of transmitting the light transmitted through the polarizing plate 150 to the side of the color filters 381 and 382, and the liquid crystal shutter 373 is in the state of blocking the light transmitted through the polarizing plate 150, for example. In such a case, the light transmitted through the liquid crystal shutters 371 and 372 is respectively transmitted through the color filters 381 and 382, thereby yielding red light and green light. At least part of these red light and green light will be incident onto the red transmission region 481 and the green transmission region 482 of the second polarizing region 182 after being transmitted through the polarizing plate 170. On the other hand, the light transmitted through the polarizing plate 150 will not be incident onto the color filter 383 of the blue display pixel 363. Consequently, no blue light is incident on the blue transmission region 483 of the polarization axis controlling plate 180. Note that the red light and green light transmitted through the red transmission region 481 and the green transmission region 482 of the polarization axis controlling plate 180 are viewed by the viewer 500 wearing the polarized glasses 200, as part of the right eye image light and left eye image light.

The second polarizing region 182 has different thicknesses in positions facing the red display pixel 361, the green display pixel 362, and the blue display pixel 363 of the image generating section 160 respectively, in the orthogonal direction to the plane direction. To be more specific, as shown in Fig. 5, the thickness "D1" of the red transmission region 481 facing the red display pixel 361, the thickness "D2" of the green transmission region 482 facing the green display pixel 362, and the thickness "D3" of the blue transmission region 483 facing the blue display pixel 363 are different from each other. Specifically, D1, D2, and D3 get smaller in this order. In other words, in the second polarizing region 182, the red transmission region 481 is the thickest and the blue transmission region 483 is the thinnest, in proportion to the wavelength of light transmitted through the red transmission region 481, the green transmission region 482, and the blue transmission region 483. The stated thicknesses are repeated periodically. In this way, by varying the thicknesses of the red transmission region 481, the green transmission region 482, and the blue transmission region 483, the retardation value of the second polarizing region 182 is uneven in the plane direction.

The retardation value is proportional to the difference of refractive index with respect to normal light and abnormal light incident onto the second polarizing region 182, and the optical length of the incident light for the second polarizing region 182, but is inversely proportional to the wavelength of the incident light. The retardation value specifically represents a phase difference (phase delay) generated between the normal light and the abnormal light when the incident light is transmitted through the second polarizing region 182. Accordingly, when the second polarizing region 182 is made of a uniform material, red light incident to the red transmission region 481 through the red display pixel 361 causes a phase difference between the normal light and the abnormal light thereof during transmission through the red transmission region 481, in accordance with the thickness (D1) of the red transmission region 481 and the wavelength of the red light. Just as in the case of this red light, the green light incident to the green transmission region 482 through the green display pixel 362 and the blue light incident to the blue transmission region 483 through the blue display pixel 363 respectively cause a phase difference between the normal light and the abnormal light thereof during transmission through the green transmission region 482 and the blue transmission region 483, in accordance with the thicknesses (D2, D3) of the green transmission region 482 and the blue transmission region 483 and the wavelengths of the green light and the blue light, respectively.

The thickness (D1) of the red transmission region 481 is set to have a retardation value of a size of half of the wavelength of the incident red light. This enables the red transmission region 481 to perform emission by rotating the polarization axis of the red light incident thereto, by the angle of 90 degrees with accuracy. Likewise, the thicknesses (D2, D3) of the green transmission region 482 and the blue transmission region 483 are set to have respective retardation values of a size of half of the wavelength of the incident green light and the incident blue light respectively. This enables the green transmission region 482 and the blue transmission region 483 to perform emission by rotating the polarization axes of the incident green light and the incident blue light by the angle of 90 degrees with accuracy, respectively.

In this way, the second polarizing region 182 of the polarization axis controlling plate 180 has different thicknesses in the orthogonal direction to the plane direction, in positions at which light from the red display pixel 361, the green display pixel 362, and the blue display pixel 363 of the image generating section 160 is respectively incident, depending on the wavelength of the light. Moreover, the thickness thereof is set to have a retardation value of a size of half of the wavelength of the respective incident light. Accordingly, light emitted from the polarization axis controlling plate 180 has a polarization axis rotated by the angle of 90 degrees regardless of the wavelength of the light. Therefore, in the left eye image light, for example, the polarization axis of the light of a particular wavelength does not undergo rotation by the polarization axis controlling plate 180 by an angle largely different from 90 degrees. Consequently, when the viewer 500 wearing the polarized glasses 200 views the left eye image light transmitted through the second polarizing region 182, the left eye image light is harder to be absorbed by the left eye image transmission section 234. Accordingly, it becomes possible to alleviate the change in color that occurs in the viewed left eye image.

It should be noted that the right eye image light emitted from the right eye image generating region 162 of the image generating section 160 is transmitted through the polarization axis controlling plate 180 without undergoing rotation of its polarization axis. Accordingly, a birefringent material is not used for the first polarizing region 181 of the polarization axis controlling plate 180. Consequently, when the viewer 500 views the right eye image light transmitted through the first polarizing region 181, the change in color hardly occurs in the right eye image. However, when the change in color occurs in the right eye image for other reasons, the first polarizing region 181 may have different thicknesses in the orthogonal direction to the plane direction just as the second polarizing region 182 for alleviating the change in color.

Furthermore, the second polarizing region 182 of the polarization axis controlling plate 180 is not limited to the above-described form in which thicknesses thereof at positions corresponding to respective pixels of the red display pixel 361, the green display pixel 362, and the blue display pixel 363 are made different from each other in the orthogonal direction to the plane direction. In one different example, arrangement is possible in which a red display pixel 361, a green display pixel 362, and a blue display pixel 363 that are adjacent to each other in the image generating section 160 are grouped as one unit pixel, and the polarization axis controlling plate 180 has different thicknesses at positions facing unit pixels respectively, in the orthogonal direction to the plane direction. In this case, since the retardation value is different for each of the plurality of unit pixels, the retardation value of the second polarizing region 182 on the whole is uneven. As a result, when the viewer 500 wearing the polarized glasses 200 views the left eye image light transmitted through the second polarizing region 182, the left eye image transmission section 234 is prevented from absorbing light of a particular wavelength in the left eye image light. Accordingly, it becomes possible to alleviate the change in color that occurs in the viewed left eye image. Moreover, manufacturing becomes easy since the pitch of the different thicknesses in the polarization axis controlling plate 180 can be large. For differing thicknesses, it is possible either to form adjacent regions in a step form as in Fig. 5, or to connect the adjacent regions as smooth continuation. As a further different example, the second polarizing region 182 of the polarization axis controlling plate 180 may have random thicknesses. In this case, the second polarizing region 182 of the polarization axis controlling plate 180 may have thicknesses D1 and D3 which are random.

In addition, the second polarizing region 182 of the polarization axis controlling plate 180 may be made from materials having different retardation values for positions facing respective pixels of the red display pixel 361, the green display pixel 362, and the blue display pixel 363, respectively. In this case, the red transmission region 481, the green transmission region 482, and the blue transmission region 483 are respectively made from a material such that the retardation value of light transmitted through the respective region is half wavelength of respective light at a particular same thickness. In addition, the retardation value may be set by the amount of additives generating birefringence.

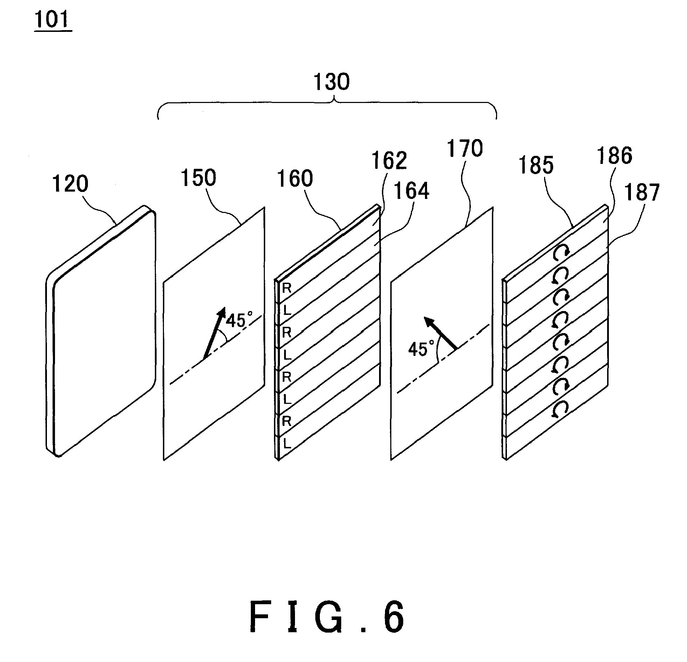

Fig. 6 is an exploded perspective view showing a stereoscopic image displaying apparatus 101 according to another embodiment of the present invention. In the stereoscopic image displaying apparatus 101 shown in Fig. 6, the same configurations as those of the stereoscopic image displaying apparatus 100 shown in Fig. 1 are assigned with the same reference numbers, and the description thereof is omitted in the following. As shown in Fig. 6, the stereoscopic image displaying apparatus 101 has a polarization axis controlling plate 185, instead of the polarization axis controlling plate 180 of the stereoscopic image displaying apparatus 100. This polarization axis controlling plate 185 includes first polarizing regions 186 and second polarizing regions 187. The positions and the sizes of each of the first polarizing regions 186 and each of the second polarizing regions 187 of the polarization axis controlling plate 185 correspond to the positions and the sizes of each of the right eye image generating regions 162 and each of the left eye image generating regions 164 of the image generating section 160, just as the positions and the sizes of each of the first polarizing regions 181 and each of the second polarizing regions 182 of the polarization axis controlling plate 180. Consequently, in the usage state of the stereoscopic image displaying apparatus 101, the right eye image light transmitted through the right eye image generating region 162 is incident to the first polarizing region 186, and the left eye image light transmitted through the left eye image generating region 164 is incident to the second polarizing region 187.

The first polarizing region 186 emits incident right eye image light, as circularly polarized light in the clockwise direction. The second polarizing region 187 emits incident left eye image light, as circularly polarized light in the counterclockwise direction. Note that the arrows of the polarization axis controlling plate 185 in Fig. 6 indicate the rotation directions of the polarized light transmitted through this polarization axis controlling plate 185. A quarter wave retarder whose optical axis is in the horizontal direction is used for the first polarizing region 186 for example, and a quarter wave retarder whose optical axis is in the vertical direction is used for the second polarizing region 187 for example. Each of the first polarizing regions 186 and each of the second polarizing regions 187 of the polarization axis controlling plate 185 are respectively divided into a plurality of small cells extending in the horizontal direction, just as in the case of each of the first polarizing regions 181 and each of the second polarizing regions 182 of the polarization axis controlling plate 180. Each one of these cells constitutes one of a red transmission region 484, a green transmission region 485, and a blue transmission region 486, detailed later. In the first polarizing region 186 and the second polarizing region 187 of the polarization axis controlling plate 185, a red transmission region 484, a green transmission region 485, and a blue transmission region 486 are arranged repetitively in the horizontal direction in this order.

When viewing the stereoscopic image displaying apparatus 101 equipped with the polarization axis controlling plate 185, the viewer 500 wears polarized glasses (not shown in the drawings) provided with a quarter wave retarder and a polarizing lens at a position corresponding to the right eye 512 side and a position corresponding to the left eye 514 side. In these polarized glasses, the optical axis of the quarter wave retarder provided at the position corresponding to the right eye 512 side of the viewer 500 is in the horizontal direction, and the optical axis of the quarter wave retarder provided at the position corresponding to the left eye 514 side of the viewer 500 is in the vertical direction. Moreover, the transmission axes of both of the polarizing lens provided at the position corresponding to the right eye 512 side of the viewer 500 and the polarizing lens provided at the position corresponding to the left eye 514 side of the viewer 500 are in a direction toward the oblique right by the angle of 45 degrees from the viewpoint of the viewer 500, and the absorption axes thereof are in the direction orthogonal to the direction of the transmission axes.

When the viewer 500 views the stereoscopic image displaying apparatus 101 wearing the above-described polarized glasses, in the right eye 512 side of the viewer 500, when circularly polarized light whose polarization axis is in the clockwise direction seen from the viewer 500 is incident thereto, the circularly polarized light is viewed by the right eye 512 of the viewer 500 by being transmitted through the polarized lenses after undergoing conversion into linear polarized light in the oblique right direction by the angle of 45 degrees by means of the quarter wave retarder whose optical axis is in the horizontal direction. In addition, in the left eye 514 side of the viewer 500, when circularly polarized light whose polarization axis is in the counterclockwise direction seen from the viewer 500 is incident thereto, the circularly polarized light is viewed by the left eye 514 of the viewer 500 by being transmitted through the polarized lenses after undergoing conversion into linear polarized light in the oblique right direction by the angle of 45 degrees by means of the quarter wave retarder whose optical axis is in the vertical direction. In this way, by observing the stereoscopic image display apparatus 101 wearing the polarized lenses described above, the right eye 512 is able to view only the right eye image included in the right eye image light, and the left eye 514 is able to view only the left eye image included in the left eye image light. Consequently, the viewer 500 is able to perceive the right eye image and the left eye image as a stereoscopic image.

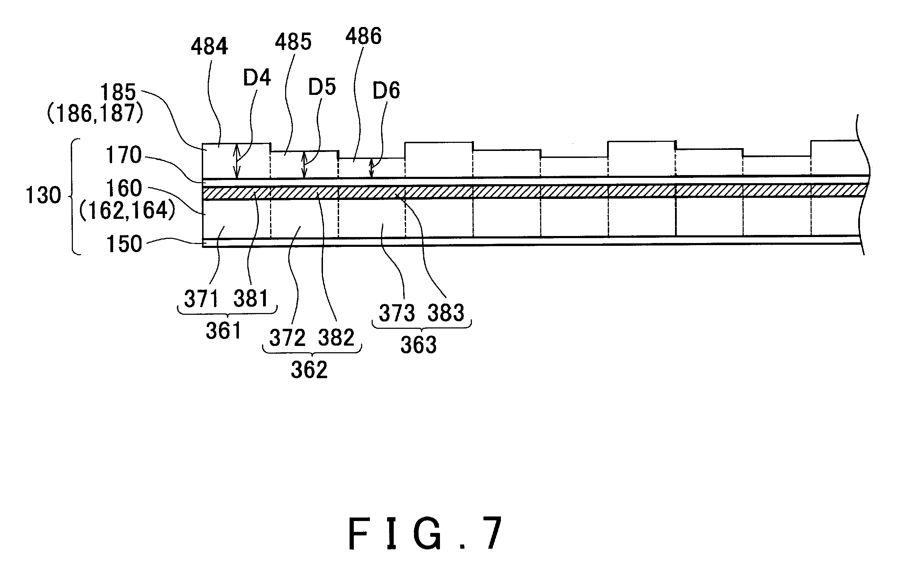

Fig. 7 is a schematic cross-sectional view only showing an image displaying section 130 and a polarization axis controlling plate 185 from the stereoscopic image displaying apparatus 101. Fig. 7 is a schematic cross-sectional view in which the stereoscopic image displaying apparatus 101 is cut at a horizontal cross section across either the first polarizing region 186 or the second polarizing region 187 of the polarization axis controlling plate 185. Note that in Fig. 7, the same configurations as those in Fig. 5 are assigned with the same reference numbers, and the description thereof is omitted in the following.

As shown in Fig. 7, the red transmission region 484 of the first polarizing region 186 and the second polarizing region 187 is placed in a position facing the red display pixel 361 of the right eye image generating region 162 and the left eye image generating region 164, in the state where the image displaying section 130 and the polarization axis controlling plate 185 are assembled as part of the stereoscopic image displaying apparatus 101. In the similar manner, the green transmission region 485 and the blue transmission region 486 of the first polarizing region 186 and the second polarizing region 187 are respectively placed in positions respectively facing the green display pixel 362 and the blue display pixel 363 of the right eye image generating region 162 and the left eye image generating region 164.

The first polarizing region 186 and the second polarizing region 187 have different thicknesses in positions facing the red display pixel 361, the green display pixel 362, and the blue display pixel 363 of the image generating section 160 respectively, in the orthogonal direction to the plane direction. To be more specific, as shown in Fig. 7, the thickness "D4" of the red transmission region 484 facing the red display pixel 361, the thickness "D5" of the green transmission region 485 facing the green display pixel 362, and the thickness "D6" of the blue transmission region 486 facing the blue display pixel 363 are different from each other. Specifically, D4, D5, D6 get smaller in this order. In other words, in the second polarizing region 187, the portion of the red transmission region 484 is the thickest in the direction orthogonal to the plane direction, and the portion of the blue transmission region 486 is the thinnest. In this way, by varying the thicknesses of the red transmission region 484, the green transmission region 485, and the blue transmission region 486, the retardation value of the second polarizing region 187 is uneven in the plane direction.

The thickness D4 of the red transmission region 484 is set to have a retardation value of a size of quarter of the wavelength of the red light incident to the red transmission region 484. This enables the red transmission region 484 to perform emission by converting the red light incident thereto, to circularly polarized light in the clockwise direction or the counterclockwise direction with accuracy. Likewise, the thicknesses D5 and D6 of the green transmission region 485 and the blue transmission region 486 are set to have respective retardation values of a size of quarter of the wavelength of the incident green light and the incident blue light respectively. This enables the green transmission region 485 and the blue transmission region 486 to perform emission by rotating the polarization axes of the incident green light and the incident blue light in the clockwise direction or the counterclockwise direction with accuracy respectively.

In this way, the second polarizing region 187 of the polarization axis controlling plate 185 has different thicknesses in the orthogonal direction to the plane direction, in positions at which light from the red display pixel 361, the green display pixel 362, and the blue display pixel 363 of the image generating section 160 is respectively incident, depending on the wavelength of the light. Moreover, the thickness thereof is set to have a retardation value of a size of quarter of the wavelength of the respective incident light. Accordingly, light emitted from the polarization axis controlling plate 185 will be circularly polarized light in either the clockwise direction or the counterclockwise direction regardless of the wavelength of the light. Consequently, when the viewer 500 wearing the polarized glasses (not shown in the drawings) views the image light transmitted through the polarization axis controlling plate 185, the image light is harder to be absorbed by the polarizing lens provided in the polarized glasses. Accordingly, it becomes possible to alleviate the change in color that occurs in the viewed right eye image and left eye image.

In addition, the first polarizing region 186 and the second polarizing region 187 of the polarization axis controlling plate 185 may be quarter wave retarders made from materials having different retardation values for positions facing respective pixels of the red display pixel 361, the green display pixel 362, and the blue display pixel 363, respectively. In this case, the red transmission region 484, the green transmission region 485, and the blue transmission region 486 are respectively made from a material such that the retardation value of light transmitted through the respective region is quarter wavelength of respective light, for example. In addition, the retardation value may be set by the amount of additives generating birefringence.

While an aspect of the present invention has been described by way of the above-described embodiment, the technical scope of the invention is not limited to the above described embodiment. It is apparent to persons skilled in the art that various alternations and improvements can be added to the above-described embodiment. It is apparent from the scope of the claims that the embodiment added such alternations or improvements can be included in the technical scope of the invention.

As apparent from the foregoing description, according to one embodiment of the present invention, the retardation value is uneven in the plane direction including the first polarizing region and the second polarizing region of the polarization axis controlling plate. Accordingly, it becomes possible to alleviate the color of light emitted from the polarization axis controlling plate.

## Claims

1. A stereoscopic image displaying apparatus for displaying a stereoscopic image to a viewer, comprising:
an image generating section that includes a right eye image generating region for generating a right eye image and a left eye image generating region for generating a left eye image, the image generating section emitting right eye image light including the right eye image and left eye image light including the left eye image as linear polarized light of which polarization axes are substantially parallel with each other; and
a polarization axis controlling plate that includes a first polarizing region and a second polarizing region that, when the right eye image light and the left eye image light are incident onto the first polarizing region and the second polarizing region respectively, emit the incident right eye image light and left eye image light, as linear polarized light of which polarization axes are substantially orthogonal to each other or circularly polarized light of which polarization axes are rotated in directions opposite to each other, wherein
each of the right eye image generating region and the left eye image generating region of the image generating section includes a pixel having a red color filter, a pixel having a green color filter, and a pixel having a blue color filter, and
a retardation value of the polarization axis controlling plate is uneven for alleviating color of the linear polarized light and the circularly polarized light that are emitted.

2. The stereoscopic image displaying apparatus as set forth in Claim 1, wherein
the polarization axis controlling plate emits the incident right eye image light and left eye image light, as linear polarized light of which the polarization axes are substantially orthogonal to each other, and
the polarization axis controlling plate further has a retardation value of a half wavelength with respect to a wavelength of the red at a position facing the pixel having the red color filter of the image generating section, and a retardation value of a half wavelength with respect to a wavelength of the green at a position facing the pixel having the green color filter of the image generating section, and a retardation value of a half wavelength with respect to a wavelength of the blue at a position facing the pixel having the blue color filter of the image generating section.

3. The stereoscopic image displaying apparatus as set forth in Claim 1, wherein
the polarization axis controlling plate emits the incident right eye image light and left eye image light, as circularly polarized light of which polarization axes are rotated in directions opposite to each other, and
the polarization axis controlling plate has a retardation value of a quarter wavelength with respect to a wavelength of the red at a position facing the pixel having the red color filter of the image generating section, and a retardation value of a quarter wavelength with respect to a wavelength of the green at a position facing the pixel having the green color filter of the image generating section, and a retardation value of a quarter wavelength with respect to a wavelength of the blue at a position facing the pixel having the blue color filter of the image generating section.

4. The stereoscopic image displaying apparatus as set forth in Claim 2 or 3, wherein
the polarization axis controlling plate has different thicknesses respectively in a position facing the pixel having the red color filter of the image generating section, a position facing the pixel having the green color filter of the image generating section, and a position facing the pixel having the blue color filter of the image generating section, in an orthogonal direction to a plane direction.

5. The stereoscopic image displaying apparatus as set forth in Claim 2 or 3, wherein
the polarization axis controlling plate is made of materials having different retardation values respectively for a position facing the pixel having the red color filter of the image generating section, a position facing the pixel having the green color filter of the image generating section, and a position facing the pixel having the blue color filter of the image generating section.

6. The stereoscopic image displaying apparatus as set forth in Claim 2 or 3, wherein
the polarization axis controlling plate is made by adding additives generating birefringence in different amounts respectively for a position facing the pixel having the red color filter of the image generating section, a position facing the pixel having the green color filter of the image generating section, and a position facing the pixel having the blue color filter of the image generating section.
